# DEMANDE DE BREVET EUROPEEN

(11) **EP 3 667 112 A1**
(43) Date de publication de la demande: **17.06.2020**
(21) Numéro de dépôt: 19213339.5
(22) Date de dépôt: 03.12.2019
(51) Int. Cl.: F16D 48/02

(54) **ACTIONNEUR DE COMMANDE D'EMBRAYAGE A FILTRE ACOUSTIQUE INTEGRE**

(30) Priorité: 10.12.2018 FR 1872590
(71) Demandeur: RENAULT s.a.s., 92100 Boulogne-Billancourt (FR)
(72) Inventeur: FAGUET, Gilles, 95550 BESSANCOURT (FR)

(57) **Abrégé**

Actionneur de commande d'embrayage de véhicule (5) présentant au moins une conduite interne de fluide (10) raccordée par une extrémité à un tuyau de commande amont (4) relié à un émetteur de pression hydraulique (2) contrôlé par une pédale de débrayage (la), et par une autre extrémité à un tuyau de commande aval (6) relié à un récepteur hydraulique de manœuvre d'embrayage, caractérisé en ce qu'il intègre un filtre acoustique (13) limitant les pics de vibration transmis par le fluide à la chaîne cinématique lors de l'enfoncement et de la remontée de la pédale de débrayage (la).

## Description

La présente invention se rapporte à la commande hydraulique des embrayages.

Plus précisément, elle a pour objet un actionneur de commande d'embrayage de véhicule présentant au moins une conduite interne de fluide raccordée par une extrémité à un tuyau de commande amont, relié à un émetteur de pression hydraulique contrôlé par une pédale de débrayage, et par une autre extrémité à un tuyau de commande aval, relié à un récepteur hydraulique de manœuvre d'embrayage. L'invention a également pour objet un dispositif de commande d'embrayage comportant une pédale de débrayage, un émetteur de pression hydraulique, un récepteur hydraulique de manœuvre d'embrayage, et un actionneur de commande, disposé dans le circuit de commande de l'embrayage, entre l'émetteur et le récepteur. L'invention a encore pour objet un procédé de commande hydraulique d'embrayage à l'aide d'un tel dispositif.

Le dispositif de commande hydraulique de l'embrayage inclut la pédale de débrayage, un émetteur de pression, une conduite hydraulique et un récepteur de pression hydraulique, tel qu'une butée hydraulique. L'actionneur est disposé dans le circuit hydraulique, entre l'émetteur et le récepteur de pression. L'actionneur peut être associé à un limiteur de débit (ou PTL pour *« Peak Torque Limiter* ») sur la commande hydraulique, pour réduire l'impact des à-coups de couple liés aux ré-embrayages trop rapides, sur la chaîne cinématique. La fonction du PTL est de ralentir la remontée la fermeture de l'embrayage en limitant le débit de retour d'huile vers l'émetteur, lors d'un relâchement trop rapide de la pédale.

L'actionneur permet d'ouvrir la chaîne cinématique en actionnant la butée hydraulique de manière à désaccoupler le moteur de la boîte de vitesses, lorsque le conducteur enfonce sa pédale de débrayage. Il peut aussi permettre la réalisation de phases de vol libre ou « *sailing* », c'est à dire de roulage en roue libre, en découplant temporairement le moteur de la chaîne cinématique, lorsque les conditions de conduite le permettent.

Lors de l'enfoncement ou de la remontée de la pédale, des pics de bruit vibratoire apparaissent dans le fluide et sont transmis à la chaîne cinématique. Ces vibrations créent des nuisances acoustiques. Pour les supprimer, on peut ajouter un filtre acoustique, ou « *damper* » sur la commande hydraulique de l'embrayage.

Le filtre acoustique peut être implanté sur le tuyau de commande hydraulique, selon une disposition illustrée par la publication US 2004 0026208. Toutefois, dans cette disposition, il est encombrant, et introduit un coût supplémentaire élevé, dans le prix de revient global de la commande.

La présente invention vise à limiter les pics de bruit vibratoire dans la chaîne cinématique, lors de l'actionnement de la pédale d'embrayage sans ajouter d'élément supplémentaire dans le circuit de commande hydraulique.

Dans ce but, elle propose d'intégrer à l'actionneur un filtre acoustique limitant les pics de vibration transmis par le fluide à la chaîne cinématique, lors de l'enfoncement et de la remontée de la pédale de débrayage.

Dans un mode de réalisation particulier de l'invention, le filtre est implanté sur une conduite interne de fluide de l'actionneur. Dans le dispositif de commande correspondant, l'actionneur est disposé de préférence entre l'émetteur et le récepteur hydraulique actionnant la pédale de débrayage.

De préférence, le fluide de commande sollicite le filtre acoustique au travers de la conduite interne, lorsque l'embrayage est commandé à partir de la pédale de débrayage.

La présente invention sera mieux comprise à la lecture de la description suivante de celle-ci, en se reportant aux dessins annexés sur lesquels :
[Fig. 1] est un schéma d'ensemble de commande d'embrayage.
[Fig. 2] montre un actionneur équipé du filtre acoustique.
[Fig. 3] est un agrandissement partiel de la [Fig. 2].
[Fig. 4] est une vue éclatée du filtre, correspondant à la [Fig. 3]

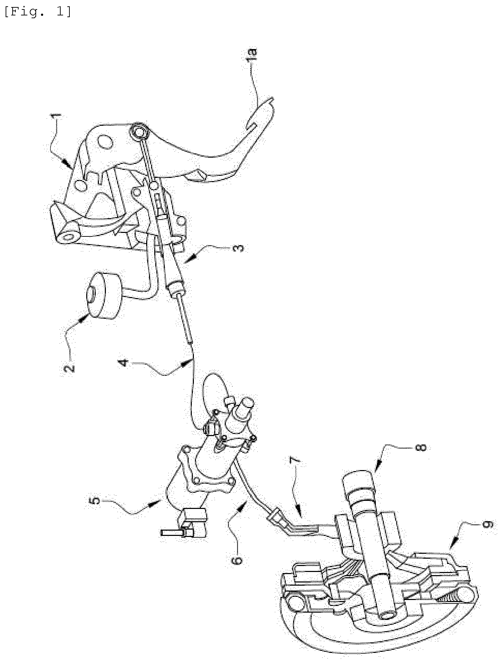

Le système de de commande hydraulique d'embrayage illustré par la [Fig. 1], regroupe plusieurs composants. Sur le schéma, on a représenté :
- le pédalier 1 du véhicule, avec la pédale de débrayage la
- un réservoir d'huile 2 de commande d'embrayage, commun avec le circuit de freinage
- un émetteur d'huile 3 sur le circuit hydraulique de l'embrayage,
- un tuyau de commande amont 4,
- l'actionneur d'embrayage 5,
- un tuyau de commande aval 6,
- une pipette de commande d'embrayage 7 à l'arrivée du tuyau aval 6 sur un récepteur comportant une butée hydraulique de commande d'embrayage,
- l'arbre primaire de la boîte de vitesses 8, et
- l'embrayage proprement dit 9.

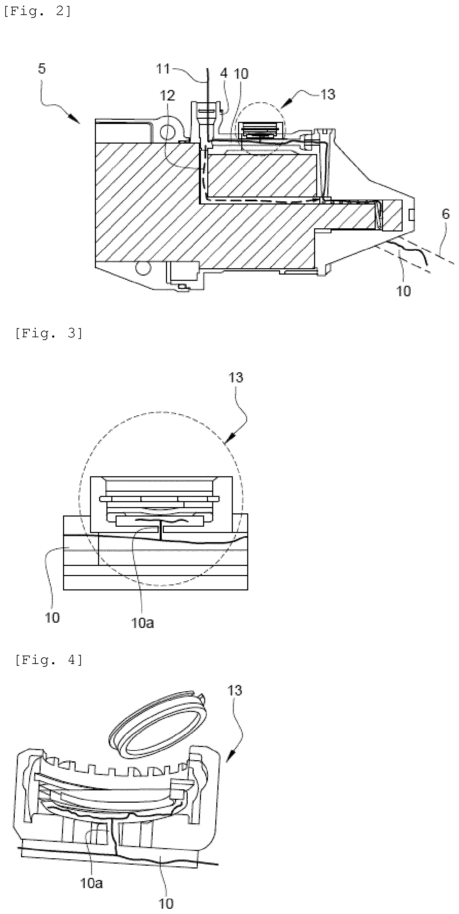

L'actionneur 5 se retrouve sur la [Fig. 2]. Il présente au moins une conduite interne de fluide 10 raccordée par une extrémité au tuyau de commande amont 4 relié à l'émetteur de pression hydraulique 3, contrôlé par la pédale de débrayage la. Par une autre extrémité, la conduite 9 est raccordée au tuyau de commande aval 6, relié à un récepteur hydraulique de manœuvre de l'embrayage 9.

L'actionneur 5 permet d'ouvrir la chaîne cinématique du véhicule, en actionnant la butée hydraulique pour désaccoupler le moteur de la boîte de vitesses Comme indiqué plus haut, le système peut également comporter un PTL (non représenté).

Lors d'un débrayage, le flux d'huile 11 en provenance de l'émetteur 3, entre dans l'actionneur 5 par le conduit amont 4 dont on a représenté l'arrivée sur l'actionneur. Il emprunte la conduite interne 10, lorsque l'ouverture de l'embrayage est contrôlée par le conducteur à partir de la pédale la. En revanche, il emprunte une conduite secondaire 12 lorsque l'embrayage est contrôlé par l'unité de contrôle de la transmission ou du moteur (ECU pour *« Engine Contrôle Unit* ») non représentée. Il en ressort par le conduit aval 6, en direction de l'embrayage 9. Lors d'un ré-embrayage, le fluide transite en sens inverse au travers de l'actionneur 5.

L'actionneur 5 illustré par la [Fig. 2] est ainsi capable d'assurer la commande de l'embrayage par le conducteur à partir du pédalier 1 d'une part, et sa commande électronique d'autre part, intervenant notamment dans les fonctions dites d'« *E-clutch* ». La commande électronique assure également l'ouverture automatique de l'embrayage dans les phases de vol libre ou « *Sailing* », lorsque les conditions de conduite le permettent.

Conformément à l'invention, le filtre 5 intègre un filtre acoustique 13, limitant les pics de vibration transmis par le fluide à la chaîne cinématique, lors de l'enfoncement et de la remontée de la pédale de débrayage. Le filtre acoustique 13 est intégré à l'actionneur 5. Comme sur la [Fig. 2], il peut être implanté à l'extérieur de l'actionneur. Il est alors assemblé sur celui-ci. Il communique avec la conduite interne 10 au travers d'une ouverture 10a de celle-ci, visible sur la [Fig. 3] et la [Fig. 4]. Le filtre 13 comporte une membrane déformable 13a visible sur ces figures. Elle est soumise à la pression d'huile dans le conduit 10 et sensible aux variations de pression. L'oscillation de la membrane 13a du filtre 13 amortit les pics d'ondes de pression d'huile, provoquant des bruits/vibrations trop importants.

Sans sortir du cadre de l'invention, le filtre peut être placé sur l'actionneur dans d'autres dispositions. Au lieu d'une membrane, le composant déformable peut aussi être de nature différente. Il peut notamment s'apparenter à un système masse et ressort, calé sur la ou les fréquences à traiter.

Dans le mode de réalisation décrit, le filtre 13 est contourné par une dérivation interne 12 de la conduite, qui est empruntée par le fluide dans certaines circonstances, par exemple lorsque la pédale de débrayage est commandée indépendamment de la pédale de débrayage. Le fluide de commande sollicite ainsi le filtre acoustique au travers de la conduite interne, uniquement lorsque l'embrayage est commandé à partir de la pédale de débrayage. Cette solution technique est facilement intégrable dans un dispositif de commande hydraulique d'embrayage. Le filtre est compact et facile à implanter dans l'actionneur. Le dispositif de commande d'embrayage comporte un actionneur à filtre de vibrations intégré, placé dans une zone généralement dégagée.

La mise en place d'un filtre sur l'actionneur n'induit ni modification lourde de l'actionneur, ni évolution obligatoire de style. Le filtre acoustique peut être réalisé directement par moulage dans le corps de l'actionneur. La fonction est ainsi aisée à mettre en œuvre, et son coût est modéré.

En conclusion, l'intégration du filtre acoustique dans l'actionneur permet de réaliser une économie sur la commande d'embrayage en supprimant le composant réalisant habituellement la fonction de filtrage à l'écart de l'actionneur, sur le tuyau de commande.

## Revendications

1. Actionneur de commande d'embrayage de véhicule (5) présentant au moins une conduite interne de fluide (10) raccordée par une extrémité à un tuyau de commande amont (4) relié à un émetteur de pression hydraulique (2) contrôlé par une pédale de débrayage (1a), et par une autre extrémité à un tuyau de commande aval (6) relié à un récepteur hydraulique de manœuvre d'embrayage, **caractérisé en ce qu'**il intègre un filtre acoustique (13) limitant les pics de vibration transmis par le fluide à la chaîne cinématique lors de l'enfoncement et de la remontée de la pédale de débrayage (la).

2. Actionneur de commande d'embrayage (5) selon la revendication 1, **caractérisé en ce que** le filtre acoustique (13) est implanté à l'extérieur de l'actionneur (5).

3. Actionneur de commande d'embrayage (5) selon la revendication 2, **caractérisé en ce que** le filtre (13) est assemblé sur l'actionneur (5) et communique avec la conduite interne (10) au travers d'une ouverture (10a) de celle-ci.

4. Actionneur de commande d'embrayage (5) selon la revendication 3, **caractérisé en ce que** le filtre (13) présente une membrane déformable (13a) sensible aux variations de pression dans la conduite interne (10).

5. Actionneur de commande d'embrayage (5) selon la revendication 2, 3 ou 4, **caractérisé en ce que** le filtre (13) est contourné par une dérivation interne (12), empruntée par le fluide lorsque la pédale de débrayage (la) est commandée indépendamment de la pédale de débrayage (la).

6. Dispositif de commande d'embrayage comportant une pédale de débrayage (la), un émetteur de pression hydraulique (3) et un récepteur hydraulique de manœuvre d'embrayage, **caractérisé en ce qu'**il comporte un actionneur (5) conforme à l'une des revendications précédentes.

7. Procédé de commande hydraulique d'embrayage par un dispositif selon la revendication 6, **caractérisé en ce que** le fluide de commande sollicite le filtre acoustique (13) au travers de la conduite interne (10), lorsque l'embrayage est commandé à partir de la pédale de débrayage (la).
